# EUROPEAN PATENT SPECIFICATION

(11) **EP 4 210 052 B1**
(45) Date of publication and mention of the grant of the patent: **19.11.2025**
(21) Application number: 22213219.3
(22) Date of filing: 13.12.2022
(51) Int. Cl.: G10L 25/54, G06F 16/60, G06F 16/683, G06F 16/632

(54) **APPARATUS AND METHOD FOR AUDIO DATA ANALYSIS**
VORRICHTUNG UND VERFAHREN ZUR AUDIODATENANALYSE
APPAREIL ET PROCÉDÉ D'ANALYSE DE DONNÉES AUDIO

(30) Priority: 11.01.2022 GB 202200274
(43) Date of publication of application: 12.07.2023
(73) Proprietor: Sony Interactive Entertainment Inc., Tokyo 108-0075 (JP)
(72) Inventor: JENABZADEH, Mandana, London, W1F 7LP (GB)
(74) Representative: D Young & Co LLP

(56) References cited:
- US-A1- 2009 254 554
- US-A1- 2015 178 387
- TOMOYASU NAKANO ET AL: "A DRUM PATTERN RETRIEVAL METHOD BY VOICE PERCUSSION", 1 January 2004 (2004-01-01), pages 1 - 4, XP055530196, Retrieved from the Internet <URL:http://citeseerx.ist.psu.edu/viewdoc/download?doi=10.1.1.143.8432&rep=rep1&type=pdf> [retrieved on 20181205]
- ALEJANDRO DELGADO ET AL: "Learning Models for Query by Vocal Percussion: A Comparative Study", ARXIV.ORG, CORNELL UNIVERSITY LIBRARY, 201 OLIN LIBRARY CORNELL UNIVERSITY ITHACA, NY 14853, 18 October 2021 (2021-10-18), pages 1 - 6, XP091079026
- TUOMAS VIRTANEN ET AL: "Probabilistic Model Based Similarity Measures for Audio Query-by-Example", APPLICATIONS OF SIGNAL PROCESSING TO AUDIO AND ACOUSTICS, 2007 IEEE WO RKSHOP ON, IEEE, PI, 1 October 2007 (2007-10-01), pages 82 - 85, XP031167126, ISBN: 978-1-4244-1618-9
- TZANETAKIS G: "Manipulation, Analysis and Retrieval Systems for Audio Signals", 1 June 2002 (2002-06-01), pages 1 - 198, XP007909028, Retrieved from the Internet <URL:http://webhome.cs.uvic.ca/~gtzan/work/pubs/thesis02gtzan.pdf> [retrieved on 20020601]

## Description

### Field of the Disclosure

The present disclosure relates to apparatus and methods for audio data analysis. In particular, the present disclosure relates to data processing apparatus and methods for analysing and selecting sound recordings for output.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Previously proposed arrangements are disclosed in T. Nakano et al., "A Drum Pattern Retrieval Method By Voice Percussion", 1 January 2004, URL: https://citeseerx.ist.psu.edu/viewdoc/download?doi=10.1.1.143.8432&rep=rep1%20&type=pdf; A. Delgado et al., "Learning Models for Query by Vocal Percussion: A Comparative Study", 18 October 2021; and US 2015/178387 A1.

Users may seek to retrieve one or more stored sound recordings from storage for a range of different purposes. One example of this is during development of a content item, such as a video game or a movie, when a developer may want to include a sound track, sound clip or sound effect from a library of sound recordings. Conventionally, a developer may search for a desired sound recording using one or more user inputs provided with respect to a displayed user interface to search for a desired sound recording. In some cases, a user may be aware of the existence of a given sound recording but not familiar with a storage location for that sound recording. An example of this is a user's smartphone that stores various files (e.g. audio files and/or video files including corresponding audio recordings) and the user wishes to retrieve a specific file but is not familiar with a storage location for the file. In such situations, users are typically required to provide one or more user inputs with respect to a displayed user interface to subsequently locate, select and retrieve one or more desired recordings.

Therefore, existing techniques can be time consuming and troublesome for a user to locate and retrieve one or more sound recordings.

Hence, there is a need to assist a user in retrieving one or more stored sound recordings.

It is in the context of the above arrangements that the presently disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating a data processing apparatus;
Figure 2 is a schematic diagram illustrating a data processing method;
Figure 3 is a schematic diagram illustrating selecting a candidate sound recording;
Figure 4 is a schematic diagram illustrating selecting a candidate sound recording using a threshold;
Figure 5 is a schematic diagram illustrating a data processing apparatus comprising first modifying circuitry;
Figure 6 is a schematic diagram illustrating a data processing apparatus comprising mixing circuitry;
Figure 7 is a schematic diagram illustrating a data processing apparatus comprising second modifying circuitry; and
Figure 8 is a schematic diagram illustrating a data processing method for modifying a sound recording in dependence upon a user input.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Embodiments of the invention will now be described, by way of example only, with reference to the accompanying drawings.

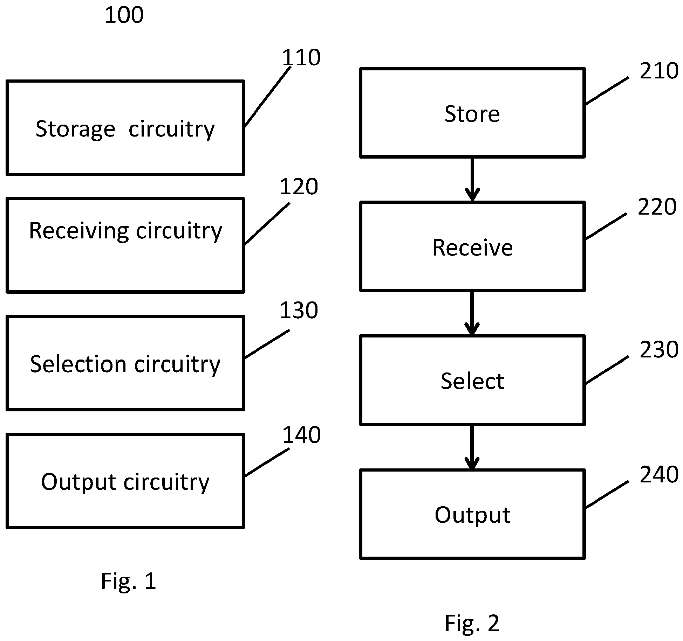

Referring now to the drawings, wherein like reference numerals designate identical or corresponding parts throughout the several views, Figure 1 schematically illustrates a data processing apparatus 100 for selecting one or more sound recordings from a plurality of sound recordings and outputting data in dependence upon one or more of the selected sound recordings. In embodiments of the disclosure, the data processing apparatus 100 comprises: storage circuitry 110 to store a plurality of sound recordings; receiving circuitry 120 to receive input data indicative of one or more sounds detected by a microphone; selection circuitry 130 to select, from the plurality of sounds recordings, one or more candidate sound recordings in dependence upon the input data; and output circuitry 140 to output data in dependence upon one or more of the candidate sound recordings.

The data processing apparatus 100 may for example be provided as part of general purpose computing device (e.g. personal computer), or an entertainment device such as a game console (e.g. the PlayStation^{®} 5), or a user device such as a smartphone, smartwatch or a tablet. In this case, the storage circuitry 110 may correspond to an internal storage (e.g. HDD and/or SSD) of such a device and/or an external storage used by such a device. In some examples, the data processing apparatus 100 may be provided as part of one or more servers. For example, the storage circuitry 110 may be distributed across a number of servers and may correspond to a cloud storage space.

The storage circuitry 110 is configured to store a plurality of sound recordings. The sound recordings may relate to a same content item such as a given video game or a given movie and/or may relate to a number of different content items. For example, the storage circuitry 110 may store a database for a given content item which includes a plurality of respective sound recordings (some of which may have a corresponding video recording) for the content item. Alternatively or in addition, the storage circuitry 110 may store a library of sound clips and sound effects for use by a content developer. Alternatively or in addition, the storage circuitry 110 may store one or more user-generated sound recordings such as recordings generated using a microphone, and optionally a camera, of a user device such as a smartphone device or head-mountable display device.

Hence more generally, the sound recordings stored by the storage circuitry 110 are not particularly limited and generally comprise audio data. The audio data for a respective sound recording is stored in a format capable of being evaluated with respect to the input data received by the receiving circuitry 120 so that an evaluation of the input data with respect to the audio data for a sound recording can be performed by the selection circuitry 130. The sound recordings stored by the storage circuitry 110 are typically each provided as part of a digital audio file or a media file and may be in an uncompressed audio file format or, more preferably, a compressed audio file format.

Examples of suitable uncompressed audio file formats include the Waveform Audio File Format (WAV or WAVE), Audio Interchange File Format (AIFF) or AU. Examples of suitable compressed audio file formats include MPEG-2 Advance Audio Coding (AAC), MPEG-1 Audio Layer III or MPEG-2 Audio Layer II (MP3), AC-3 and Enhance AC-3. In some cases, the file or may be an MP4 (MPEG-4 Part 14) file including video data and/or audio data (in some examples, the file may be an audio-only MP4 file) in which the audio data is in a compatible audio file format such as AAC or MP3.

The receiving circuitry 120 is configured to receive input data indicative of one or more sounds detected by one or more microphones. The techniques of the present disclosure use input data indicative of sounds detected by one or more microphones to allow a user to provide an input for retrieving one or more stored sound recordings by evaluating the input data with respect to individual sound recordings.

The one or more sounds detected by the one or more microphones may correspond to any audible sound, and may be any audible sound provided by a user to attempt to retrieve a sound recording. Whilst the techniques of the present disclosure, allow for a user's speech-based sound input detected by a microphone to be used by the selection circuitry 130 for selecting one or more of the sound recordings, alternatively or additionally the input data received by the receiving circuitry 120 may indicate one or more other non-speech based sound inputs generated in the user's local environment and detected by the microphone which can be used by the selection circuitry 130 for performing the selection. For example, a non-speech sound input such as a striking sound produced by the user striking an object (e.g. tapping a ceramic mug or glass or a wooden table), or grazing an object, or scrunching a piece of paper may be detected and corresponding input data received by the receiving circuitry 120. It will be appreciated that a user can create various non-speech sound inputs using one or more objects included in their local environment. Different possible inputs provided by the user and detected by a microphone are discussed in more detail later.

In some examples, one or more microphones may be provided as part of the data processing apparatus 100 (not shown in Figure 1). For example, the data processing apparatus 100 may be provided as part of a device such as a game console, smartphone or smartwatch any may further comprise one or more microphones for detecting one or more sounds in the user's local environment. Alternatively, the data processing apparatus 100 may be as shown in Figure 1 and may receive the input data indicative of one or more sounds detected by a microphone based on at least one of a wired or wireless communication (e.g. Bluetooth^{®} or WiFi^{®}) with a microphone or a device including one or more microphones. As explained previously, the data processing apparatus 100 may be provided as part of a remote server and may receive the input data indicative of one or more detected sounds based on a wireless communication with a user device and the output circuitry 140 may similarly output data to the user device according to a wireless communication.

Hence more generally, the receiving circuitry 120 receives input data indicative of one or more sounds detected in the user's local environment by one or more microphones and the selection circuitry 130 is configured to automatically select, from the plurality of sound recordings stored by the storage circuitry 110, one or more candidate sound recordings in dependence upon the input data.

The output circuitry 140 is configured to output data in dependence upon one or more of the candidate sound recordings selected by the selection circuitry 130. In some embodiments of the disclosure, the output circuitry 140 is configured to output data for each of the candidate sound recordings selected by the selection circuitry 130. Alternatively or in addition, in some embodiments of the disclosure the output circuitry 140 is configured to output data for an individual candidate sound recording. Alternatively or in addition, in some embodiments of the disclosure the output circuitry 140 is configured to output data for a predetermined number of candidate sound recordings. Alternatively or in addition, in some embodiments of the disclosure the output circuitry 140 is configured to output data for a respective sound recording obtained by mixing two or more candidate sound recordings. Alternatively or in addition, in some embodiments of the disclosure, the output circuitry 140 is configured to output data for a respective sound recording obtained by modifying a candidate sound recording. Hence more generally, the output circuitry 140 is configured to output data in dependence upon one or more candidate sound recordings selected by the selection circuitry 130. The data output by the output circuitry 140 is indicative of an audio characteristic and/or audio attribute of a candidate sound recording, modified sound recording or mixed sound recording. The data output by the output circuitry 140 is capable of allowing playback of at least a portion of a sound recording.

Figure 2 is a schematic flowchart illustrating a data processing method performed by the data processing apparatus 100 for selecting one or more sound recordings from a plurality of sound recordings and outputting data in dependence upon one or more of the selected sound recordings. In embodiments of the disclosure, the data processing method comprises:
storing (at a step 210) a plurality of sound recordings;
receiving (at a step 220) input data indicative of one or more sounds detected by a microphone;
selecting (at a step 230), from the plurality of sounds recordings, one or more candidate sound recordings in dependence upon the input data; and
outputting (at a step 240) data in dependence upon one or more of the candidate sound recordings.

In some embodiments of the disclosure, the receiving circuitry 120 is configured to receive input data indicative of one or more sounds detected by one or more microphones, wherein the input data is indicative of a speech-based input by a user, wherein the speech-based input comprises at least one of a spoken word and a non-linguistic vocalisation by the user. One or more of the sounds detected by the microphone may include a user's speech sound input corresponding to one or more words being spoken by the user. For example, the user may speak the word "dog", "bang" or "crash", for example, when attempting to retrieve a sound recording including one or more associated sounds. Optionally, in some embodiments of the disclosure the user may include a qualifying word for indicating that the words following the qualifying word are to be used for selection of one or more sound recordings. For example, a user may speak the words "retrieve crash", in which the word retrieve acts as a qualifying word. Hence more generally, the user can pronounce one or more words that are detectable by the microphone, and the receiving circuitry 120 can receive input data indicative of one or more words spoken by a user for use by the selection circuitry 130. It will be appreciated that the processing for detecting one or more spoken words may be performed at the microphone (or a user device including the microphone) and/or at the data processing apparatus 100. Therefore, in some examples the input data received by the receiving circuitry 120 may indicate one or more detected words. In other examples, the data processing apparatus executes a voice recognition algorithm to detect one or more words in dependence upon the input data received by the receiving circuitry 120.

Alternatively or in addition, one or more of the sounds detected by the microphone may include a user's speech sound input corresponding to one or more non-linguistic vocalisations by the user. A range of different non-linguistic vocalisations can be detected and corresponding input data received by the receiving circuitry 120 so that one or more non-linguistic vocalisations by a user can be used by the selection circuitry 130 for selecting one or more candidate sound recordings. Non-linguistic vocalisations represent sounds that are language independent such as laughing, grunting, sighing, panting and screaming, for example. In particular, in some embodiments of the disclosure, at least some of the plurality of sounds recordings stored by the storage circuitry 110 may correspond to sound clips including respective sound effects, and the user input received by the receiving circuitry 120 is indicative of one or more non-linguistic vocalisations by a user, and the selection circuitry 130 is configured to select one or more candidate sound recordings in dependence upon one or more of the non-linguistic vocalisations by the user to thereby retrieve one or more sound effects for the user's non-linguistic vocalisation. As such, a user may utter a sound by laughing, whistling or clicking their tongue to thereby issue a request for retrieving a sound clip including one or more matching or similar sounds. Techniques for selecting a candidate sound recording based on the input data received by the receiving circuitry 120 are discussed in more detail later.

In some embodiments of the disclosure, the receiving circuitry 120 is configured to receive input data indicative of one or more sounds detected by one or more microphones, wherein the input data is indicative of a non-speech based input by a user, wherein the non-speech based input comprises one or more sounds associated with one or more objects. As explained previously, alternatively or in addition to providing a speech-based input, a user may provide a non-speech based input using one or more objects in the user's local environment. Sounds associated with a user striking an object with their hand or with another object, or grazing a surface of an object, for example, can be generated and detected by the microphone. It will be appreciated that a range of non-speech based sound inputs provided by the user can be detected by the microphone. Therefore, the data processing apparatus 100 can potentially use non-speech based inputs detected by one or more microphones for assisting a user in retrieving one or more sounds recordings from storage.

For example, during development of a content, a user may desire to retrieve a sound clip including the sound of a person typing on a keyboard so as to create or edit a scene in the content to include such a sound clip. The user can thus create one or more sounds by interacting with a physical keyboard that is local to the user, and one or more sounds associated with the user's interaction with the keyboard (or another real-world object) can be detected by the microphone such that input data indicative of one or more sounds associated with the interaction is received by the receiving circuitry 120. In this way, the selection circuitry 130 can select one or more candidate sound recordings including one or more sounds associated with a user-keyboard interaction and the user is assisted in retrieving such sound clips.

In some embodiments of the disclosure, the selection circuitry 130 is configured to select a candidate sound recording in dependence upon a degree of match between the candidate sound recording and the input data received by the receiving circuitry 120. The selection circuitry 130 evaluates the input data with respect to at least some of the plurality of sound recordings stored by the storage circuitry 110 to calculate a degree of match for the input data with respect to data for a given sound recording. When the degree of match for a given sound recording indicates that the given sound recording either substantially matches the input data or differs from the input data by less than a threshold amount, the selection circuitry 130 selects that given sounds recording as a candidate sound recording. As explained above, the input data may include a range of different sounds including speech input and non-speech input and it will be appreciated that depending on the type of sound use of a threshold condition as mentioned above may or may not be suitable. In some examples, the selection circuitry 130 can be configured to use a condition so that a candidate sound recording is selected only if the candidate sound recording matches the input data. In other examples, a threshold condition is used for allowing selection of a candidate sound recording that differs from the input data by less than a threshold amount.

For example, the input data may be indicative of a speech-based input comprising one or more spoken words. In this case, one or more words indicated by the input data can be compared with a sound recording and a matching sound recording can be selected by the selection circuitry 130. Alternatively or in addition, the input data may be indicative of a speech-based input comprising one or more non-linguistic vocalisations by the user. In this case, an audio analysis of the input data can be performed and one or more audio properties compared with one or more audio properties of a sound recording and/or a machine learning model may be used that is trained to classify non-linguistic vocalisations so that a classification for a non-linguistic vocalisation can be compared with data (e.g. metadata or other similar identification data) for the sound recording. Alternatively or in addition, the input data may be indicative of a non-speech based input comprising one more object-based sounds. In this case, an audio analysis of the input data can be performed and one or more audio properties compared with one or more audio properties of a sound recording, and/or a machine learning model may be used that is trained to classify object-based sounds according to a type of object associated with the sound and a classification for the input data can be compared with data (e.g. a tag or metadata or other similar identification data) for the sound recording.

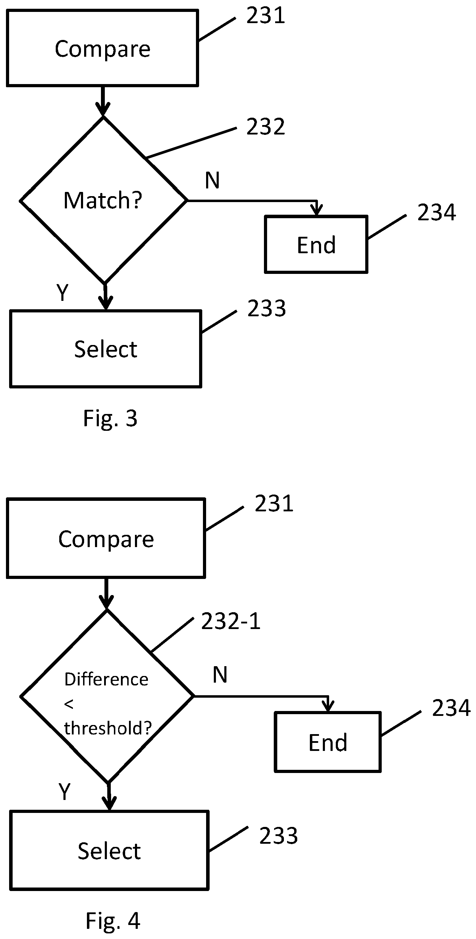

Figure 3 is a schematic flowchart illustrating operations that may be carried out as part of the step 230 of Figure 2 to select a sound recording having at least one property that matches a property of the input data. At a step 231, the selection circuitry 120 compares the input data with a respective sound recording (e.g. by comparing at least one of a spoken word indicated by the input data and a classification obtained based on an audio property of the input data). At a step 232, the selection circuitry 130 determines whether at least one property of the input data matches a property of the data for the respective sound recording. When the input data matches the respective sound recording, the flow proceeds to a step 233 at which the selection circuitry 130 selects the respective sound recording. When the input data does not match the respective sound recording, the flow proceeds to a step 234 at which the flow ends without selection of the respective sound recording. The operations illustrated in Figure 3 may be performed for at least some of the plurality of sound recordings stored by the storage circuitry 110. In some examples, the schematic flowchart in Figure 3 may include a loop operation, so that rather than ending at the step 234 the flow returns to the step 231 to perform the operations for another respective sound recording. Hence more generally, the operations illustrated in Figure 3 can be performed for at least some of the sound recordings stored by the storage circuitry 110. In some examples, the selection circuitry 130 is configured to compare the input data received by the receiving circuitry 120 with each of the plurality of sound recordings stored by the storage circuitry 110 and select each candidate sound recording for which there is a match. In other examples, the selection circuitry 130 is configured to compare the input data received by the receiving circuitry 120 with one or more sound recordings until a matching sound recording is identified. In this case, the operations illustrated in Figure 3 may be performed until at least one matching sound recording is identified so that a single matching candidate sound recording is output by the output circuitry 140. In other examples, the selection circuitry 130 is configured to compare the input data received by the receiving circuitry 120 with at least some of the sound recordings until a predetermined number of matching sound recording are identified. In this way, the selection circuitry 130 can compare the input data with at least some of the sound recording to select a predetermined number of candidate sound recordings and the output circuitry 140 can output data for a predetermined number of candidate sound recordings to thereby provide the user with a predetermined number of candidate sound recordings from which the user can make a selection.

In some embodiments of the disclosure, the selection circuitry 130 is configured to generate text data in dependence upon the input data and to select the candidate sound recording in dependence upon a comparison of the text data with metadata associated with the candidate sound recording. Any suitable speech-to-text algorithm can be executed by the selection circuitry 130 for generating text data based on the received input data. For example, the selection circuitry 230 may execute a speech-to-text program such as Dragon^{®} by Nuance for example, to generate text data for at least a portion of the input data. The selection circuitry 130 can thus compare the text data with one or more of the sound recordings according to the process of Figure 3 to identify a match based on the text data and the metadata for a sound recording. In particular, the text data can be compared with the metadata for a respective sound recording and the selection circuitry 130 selects the respective sound recording in dependence upon whether there is a match between the text data and the metadata. The metadata for a sound recording is indicative of a type of sound associated with the sound recording. For example, in the case of a sound clip for a barking dog, the metadata for the sound recording may comprise text data indicating that a dog-type of sound is associated with the sound recording. Hence, for example the input data may be indicative of one or more spoken words such as "dog" or even "barking dog". In this case, the text data generated for the input data is compared with metadata for a sound recording and in the case of a match between one or more words of the text data and one or more words of the metadata, the sound recording can be selected as a candidate sound recording. In some examples, metadata for one or more of the sound recordings may have been manually defined for a sound recording by a developer during recording.

In some embodiments of the disclosure, the metadata associated with the candidate sound recording is determined, using a machine learning model, in dependence upon one or more audio properties for the candidate sound recording. A machine learning model trained to classify audio data for a sound recording in dependence upon one or more audio properties for the audio data can be used to determine a classification for a sound recording. For example, such a machine learning model can be trained according to so-called supervised learning using labelled audio data for which the labels indicate a type or class of sound for an audio recording and the machine learning model is thus trained to learn audio properties that are characteristic of different classifications. Hence more generally, the storage circuitry 110 can store a plurality of sound recordings for which at least some of the plurality of sound recordings have associated metadata determined using a machine learning model. At least some of the plurality of sound recordings can be input to the trained machine learning model (or at least some of the data for a given sound recording is input to the machine learning model) and the machine learning model generates an output indicative of a classification for the sound recording. The output of the machine learning model may take any suitable form. For example, the machine learning model may output an integer which is mapped to a respective classification for which the model has been trained, and the number of object classifications for which the machine learning model is trained is not particularly limited. The classifications indicated by the metadata for a sound recording may for example be classifications such as "weather", "dog", "cat", "car", "train", "crowd", "war", "laughter", "traffic", "telephone" and/or "waves". However, it will be appreciated that broader or narrower classifications may be suitably used depending on the application so that rather than a broad classification of "weather", for example, a number of narrower classifications may be used such as "rain", "thunder" and "wind". Alternatively or in addition, the metadata for a respective sound recording may indicate both a broad classification and a narrower sub-classification for the sound recording.

The above discussion refers to matching input data indicative of one or more spoken words with one or more sound recordings using metadata associated with one or more sound recordings. However, the metadata may be used for matching input data indicative of a non-linguistic vocalisation and/or a non-speech based input with one or more sound recordings. Alternatively or in addition to using the metadata, one or more audio properties associated with a sound recording can be evaluated with respect to one or more audio properties associated with the input data for use in matching the input data indicative of a non-linguistic vocalisation and/or a non-speech based input with one or more sound recordings. Audio property matching techniques are discussed in more detail later.

In some embodiments of the disclosure, the receiving circuitry 120 receives input data indicative of a speech based input comprising a non-linguistic vocalisation by a user, the selection circuitry 130 is configured to generate data indicative of a classification for the non-linguistic vocalisation, and the selection circuitry 130 is configured to compare the data indicative of the classification with the metadata associated with one or more sound recordings, in which the metadata is optionally determined using a trained machine learning model according to the techniques discussed above. The selection circuitry 130 may include a trained machine learning model that has been trained to classify non-linguistic vocalisations so that the selection circuitry 130 can generate one or more classifications for input data indicative of one or more non-linguistic vocalisations. For example, during development of a scene for a content, a user (e.g. developer) may wish to retrieve a sound clip comprising a human cough. A cough performed by the user can thus be detected by the microphone, and input data indicative of the sounds of the user's cough(s) can be received by the receiving circuitry 120. The selection circuitry 130 thus generates data indicative of a classification for the input data, in which the data is indicative of a cough classification, and the selection circuitry 130 compares the data indicative of the cough classification with one or more instances of metadata associated with one or more of the respective sound recordings. In this way, a sound recording having metadata indicative of coughing can be selected by the selection circuitry 130 as a candidate sound recording. It will be appreciated that various other classifications for non-linguistic vocalisations can similarly be used.

In some embodiments of the disclosure, the receiving circuitry 120 receives input data indicative of a non-speech based input comprising one or more object-based sounds, the selection circuitry 130 is configured to generate data indicative of a classification for one or more of the object-based sounds, and the selection circuitry 130 is configured to compare the data indicative of the classification with the metadata associated with one or more sound recordings. In a manner similar to that discussed above, the selection circuitry 130 may include a trained machine learning model, which may be the same as the model referred to above or another respective machine learning model, which has been trained to classify object-based sounds according a type of object associated with the sound so that the selection circuitry 130 can generate one or more classifications for input data indicative of one or more object-based sounds. For example, during development of a scene for a content, a user (e.g. developer) may wish to retrieve a sound clip comprising a clinking glasses sound effect. A sound of two or more glasses clinking together can thus be detected by one or more microphones and the receiving circuitry 120 receives input data indicative of such sounds. The selection circuitry 130 thus generates data indicative of a classification for the input data, in which the data is indicative of a classification for a glass type of object, and the selection circuitry 130 compares the data indicative of the glass object classification with one or more instances of metadata associated with one or more of the respective sound recordings. In this way, a sound recording having metadata indicative of a glass object can be selected by the selection circuitry 130 as a candidate sound recording. It will be appreciated that various other classifications for object-based sounds can similarly be used.

The following discussion refers to using one or more audio properties indicated by the input data received by the receiving circuitry for use in matching the input data with one or more of the sound recordings in dependence upon an audio property of the data for a sound recording.

Figure 4 is a schematic flowchart illustrating operations that may be carried out as part of the step 230 of Figure 2 to select a sound recording having at least one property that matches (or substantially matches) a property of the input data. At a step 231, the selection circuitry 120 compares an audio property of the input data with an audio property of data for a respective sound recording. At a step 232-1, the selection circuitry 130 determines whether a difference between the input data and a respective sound recording is less than a threshold amount. When the difference is less than a threshold amount (indicating a relatively high degree of match), the flow proceeds to a step 233 at which the selection circuitry 130 selects the respective sound recording. When the difference is greater than or equal to the threshold amount (indicating a relatively low degree of match), the flow proceeds to a step 234 at which the flow ends without selection of the respective sound recording. As explained above in relation to Figure 3, the schematic flowchart in Figure 4 may similarly include a loop operation so that rather than ending at the step 234 the flow returns to the step 230 to perform the operations for another respective sound recording. The operations illustrated in Figure 4 can be performed for at least some of the sound recordings stored by the storage circuitry 110 and may be performed for each of the plurality of sound recordings, or until at least one candidate sound recording is selected, or until a predetermined number of candidate sound recordings are selected.

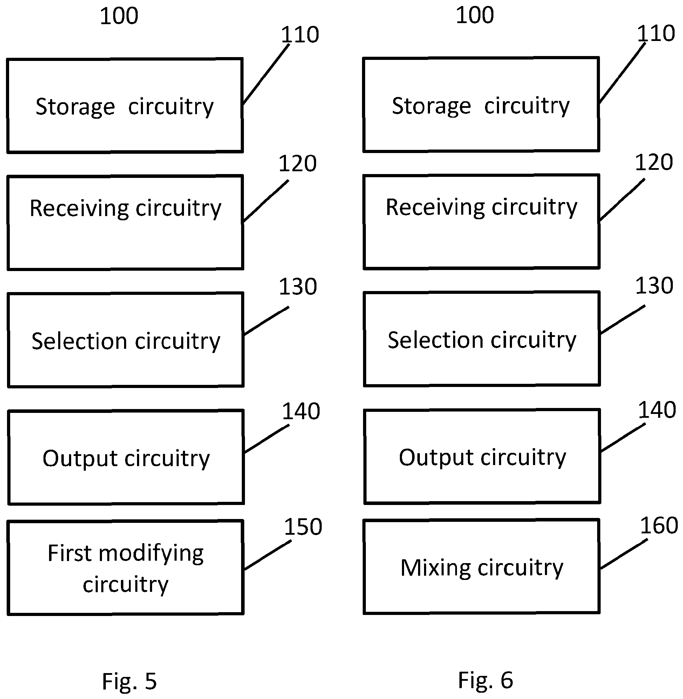

In some embodiments of the disclosure, the selection circuitry 130 is configured to select the candidate sound recording in dependence upon a difference between an audio property of the candidate sound recording and a corresponding audio property of the input data. In particular, a portion of the input data can be analysed to calculate an audio property and a portion of the data for a second recording can be similarly analysed to calculate an audio property for the sound recording and the two calculated audio properties can be compared. A number of different audio properties can be identified, such as an average frequency as a function of time, and compared for both the input data and a sound recording. In particular, an audio property such as an average pitch (mean, mode or median) for a portion of the sound recording can be compared with an average pitch for a portion of the input data. Alternatively, an average amplitude (e.g. mean, mode or median) may similarly be compared. Hence more generally, the selection circuitry 130 can be configured to select the candidate sound recording in dependence upon whether a difference between an audio property of the candidate sound recording and a corresponding audio property of the input data satisfies a threshold condition. For example, a threshold condition such as whether the difference is less than a given threshold amount (also referred to as a first threshold amount) may be used so that the candidate sound recording is selected when the difference is less than the given threshold amount. Referring now to Figure 5, in some embodiments of the disclosure the data processing apparatus 100 optionally comprises first modifying circuitry 150 to modify the audio property of the candidate sound recording in dependence upon the corresponding audio property of the input data when the difference between the audio property of the candidate sound recording and the corresponding audio property of the input data is greater than a threshold amount (also referred to as a second threshold amount). In some cases, the selection circuitry 130 selects a candidate sound recording when a difference between an audio property for the candidate sound recording and a corresponding audio property for the input data is less than a first threshold amount (e.g. difference is less than 10% of a value for an audio property of the candidate sound recording) indicating that there is at least some degree of similarity between the two audio properties. However, the data processing apparatus 100 can optionally include the first modifying circuitry 150 to modify the audio property of the candidate sound recording when the difference between the audio property for the candidate sound recording and the corresponding audio property of the input data is greater than a second threshold amount (e.g. difference is greater than 5% of a value for the audio property of the candidate sound recording) indicating that whilst there is some degree of similarly there is also not a particularly close match. Hence, the first modifying circuitry 150 can modify the audio property for the candidate sound recording in dependence upon the corresponding audio property of the input data to obtain a modified sound recording for which the difference between the audio property of the modified sound recording and the corresponding audio property of the input data is reduced. In some examples, the first modifying circuitry 150 can modify the audio property for the candidate sound recording in dependence upon the corresponding audio property of the input data so that the audio property of the modified sound recording matches the corresponding audio property of the input data. Hence, for example a candidate sound recording can be modified to change an audio property such as pitch and/or amplitude to better match an audio property of the input data.

In some examples, the input data is compared with a sound recording by comparing a spectrogram for the input data with a spectrogram for the sound recording. A first spectrogram may be generated based on a portion (segment) of the input data and a second spectrogram may be generated based on a portion (segment) of the data for a sound recording. The spectrograms each provide a representation of the spectrum of frequencies as a function of time and an amplitude associated with a respective frequency at a given time. Using the spectrogram, a frequency with the maximum amplitude can be selected for a plurality of respective times (e.g. every n milliseconds). This process can be performed for both the first spectrogram for the input data and the second spectrogram for the respective sound recording, and a comparison of the frequency with the maximum amplitude as a function of time for the first spectrogram and the second spectrogram can be used to evaluate the input data with respect to the sound recording to determine a degree of match. In some examples, rather than just selecting a single frequency with the maximum amplitude at a point in time, the two, three of four frequencies with the highest amplitude at a point in time can be selected for the first and second spectrograms and used in the comparison. In some examples, rather than selecting a frequency with the maximum amplitude at regular time intervals, a condition may be used so that a frequency with the maximum amplitude is selected at a given point in time depending on whether the maximum amplitude is greater than a threshold amplitude. In this way, one or more portions of a sound recording corresponding to a silent (or substantially silent) portion can be effectively removed from the calculation to improve the reliability of the comparison. Consequently, a respective 2D graph of the frequency with the maximum amplitude plotted against time can be obtained for both the first spectrogram and the second spectrogram, respectively, and a comparison of the 2D graphs can be used. For example, a condition may be used so that a given sound recording is selected by the selection circuitry 130 according to whether a predetermined number of consecutive points in the 2D graph obtained for the sound recording match with a predetermined number of consecutive points in the 2D graph for the input data, in which two frequencies in the respective graphs are said to match when a difference between the two frequencies is less than a threshold amount (e.g. ± X Hz of either of the frequencies being compared). Hence more generally, in response to identifying that a predetermined number of consecutive frequencies (specifically, frequencies having the maximum amplitude for that point in time) for the input data match a portion of the sound recording, the sound recording can be selected by the selection circuitry 130. It will be appreciated that any portion (segment) of the input data can be evaluated with respect to any portion (segment) of the data for the sound recording.

In some embodiments of the disclosure, the output circuitry 140 is configured to output data in dependence upon one or more of the candidate sound recordings by outputting data for at least a first candidate sound recording and a second candidate sound recording. The selection circuitry 130 is configured to select one or more candidate sound recordings in dependence upon the input data and can potentially select any number of candidate sound recordings. Therefore, in some cases two or more candidate sound recordings may be selected for a given instance of input data received by the receiving circuitry 120. An example of this is when the input data is indicative of a spoken word and two or more of the sound recordings have metadata indicative of a classification corresponding to the spoken word. In response to the selection circuitry 130 selecting two or more candidate sound recordings, the output circuitry 140 can be configured to output data for each of the candidate sound recordings. In this way, the output circuitry 140 can output first data for a first candidate sound recording and also output second data for a second candidate sound recording. The data output by the output circuitry 140 may be some or all of the data for the candidate sound recording to enable playback of at least a portion of the candidate sound recording. Hence in some cases, the output circuitry 140 outputs a portion of the data for a candidate sound recording to enable playback of a portion of the sound recording for a user, and the user can subsequently decide whether to request all of the data for the sound recording from the data processing apparatus 100 after having played a portion of the sound recording. More generally, by outputting data for a first candidate sound recording and a second candidate sound recording, a user can playback any of the first and second candidate sound recordings and select a respective sound recording that is preferred by the user.

As explained previously, the data processing apparatus 100 may in some cases be provided as part of a user device, such as a smartphone or smartwatch, in which case the data processing apparatus 100 may optionally comprise one or more audio output units (not shown in Figure 1) for outputting audio signals in dependence upon the data output by the output circuitry 140. Alternatively or in addition, the data processing apparatus 100 not comprise an audio output unit (e.g. when provided as part of a server or a user device such as a game console), in which case the output circuitry 140 outputs the data to one or more devices via a wired or wireless communication to thereby allow audio signals to be played back.

Referring now to Figure 6, in some embodiments of the disclosure the data processing apparatus 100 optionally comprises mixing circuitry 160 to mix two or more of the candidate sound recordings to obtain a combined sound recording, wherein the output circuitry 140 is configured to output data for the combined sound recording. As explained above, the selection circuitry 120 may select two or more candidate sound recordings in dependence upon the input data. The mixing circuitry 160 is configured to perform audio mixing of at least two respective candidate sound recordings that have been selected by the selection circuitry 130 to produce a combined sound recording (also referred to as a mixed sound recording). The output circuitry 140 may output the data for the combined sound recording in addition to outputting data for a first and second candidate sound recording which have been mixed to obtain the combined sound recording. Hence, the data processing apparatus 100 may automatically generate the combined sound recording and output the combined sound recording as well as outputting one or more candidate sound recordings to provide the user with a possible selection of recordings. In some examples, the output circuitry 140 may automatically output just the combined sound recording.

Alternatively, the output circuitry 140 may firstly output data for at least a portion of a first sound recording and a portion of a second sound recording, and the mixing circuitry 160 can be configured to mix the first and second sound recordings in response to a user input indicative of a request to mix the first and second sound recordings. For example, the output circuitry 130 may output data for a number of candidate sound recordings and any of the candidate sound recordings are selectable by a user, for example via a graphical user interface, to request mixing of two or more candidate sound recordings.

The mixing circuitry 160 mixes two or more of the candidate sound recordings to obtain a combined sound recording by performing one or more audio mixing operations. For example, a first and second sound recording may be mixed so that the combined sound recording includes temporally simultaneous sounds from both the first and second sound recordings. An example of this may be where the input data results in a first candidate sound recording including sounds of falling rain and a second candidate sound recording includes sounds of wind. The mixing circuitry 160 can mix the two candidate sound recordings to obtain a combined sound recording including sounds of both falling rain and wind. Hence, the mixing circuitry 160 can blend together two or more candidate sound recordings. In some cases the first candidate sound recording corresponds to a first sound clip for a first sound effect and the second candidate sound recording corresponds to a second sound clip for a second sound effect. Hence, the mixing circuitry 160 can mix two respective sound effects stored by the storage circuitry 110 to generate a mixed sound recording including a combination of the two sound effects.

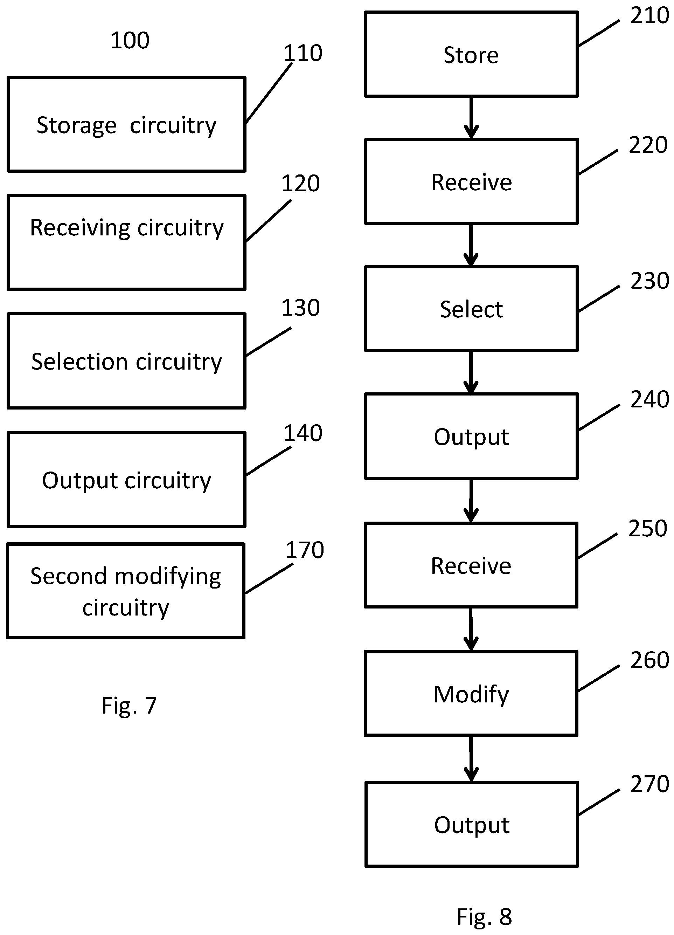

Referring now to Figure 7, in some embodiments of the disclosure the data processing apparatus 100 optionally comprises second modifying circuitry 170 (optionally referred to as just modifying circuitry 170) to modify a candidate sound recording, wherein the receiving circuitry 120 is configured to receive second input data in response to the data output by the output circuitry 140, and wherein the second modifying circuitry 170 is configured to modify the candidate sound recording in dependence upon the second input data. The first modifying circuitry 150 described with reference to Figure 5 is optionally provided and operable to modify a candidate sound recording in dependence upon a property of the first user input so as to modify a candidate sound recording having a degree of similarity that is not a particularly close match for the first user input. The second modifying circuitry 170 is operable to modify a candidate sound recording in dependence upon a second user input provided after a portion of the candidate sound recording has been output for playback to the user so that the candidate sound recording can be modified in dependence upon the second input data In response to the output circuitry 140 outputting data for at least a portion of a candidate sound recording, the user can playback at least a portion of the candidate sound recording and subsequently provide a second user input via at least one of the microphone that detected the first user input for requesting one or more sound recordings and another input device for receiving user input (e.g. a keyboard, computer mouse and/or touch screen). The second input data received by the receiving circuitry 120 is indicative of the second user input provided by the user in response to playing back the sound recording output by the output circuitry 140, and the second input data is used to modify the candidate sound recording. Hence, the user can listen to at least a portion of a given sound recording and decide whether to request the data processing apparatus 100 to modify one or more aspects of the given sound recording. The second modifying circuitry 170 is configured to modify a candidate sound recording by performing one or more audio adjustment operations on the audio data for the candidate sound recording to modify one or more audio properties for the audio data.

In particular, in response to being provided with the output sound recording, the user can provide another input (possibly again via the microphone) to indicate how the user's desired sound recording differs from the output sound recording. The user can indicate one or more properties for which modification is sought. For example, the user's input may indicate that a pitch and/or a speed associated with the sound recording is to be increased or decreased. Such a user input may be provided by the user providing a speech-based input including one or more words such as "increase pitch", "decrease pitch", "speed up" or "slow down". Alternatively or in addition, one or more such user inputs may be provided via a controller device such as a handheld controller or a keyboard. Consequently, the second input data received by the receiving circuitry 120 indicates one or more aspects of the sound recording that are to be adjusted. The second modifying circuitry 170 thus generates the modified version of the candidate sound recording and the output circuitry 140 outputs the modified version of the candidate sound recording.

Whilst Figures 1, 5, 6 and 7 illustrated different possibilities for the data processing apparatus 100, it will be appreciated that the data processing apparatus 100 may comprise any combination of the elements shown in Figures 1, 5, 6 and 7. For example, the data processing apparatus 100 may comprise the first modifying circuitry 150, the mixing circuitry 160 and the second modifying circuitry 170.

In some embodiments of the disclosure, the second input data is indicative of at least one of a speech-based input for indicating one or more modifications to be applied to the candidate sound recording. As explained above, the user may provide an input comprising one or more spoken words for indicating one or more modifications to be applied to a sound recording. Alternatively or in addition, as the second user input the user may provide a speech-based input that repeats the speech-based input provided for the first user input for requesting one or more sound recordings, and may repeat the speech-based input with a different pitch so as to indicate whether modification of the sound recording to have a higher or lower pitch is desired. For example, as the first user input, the first input data may be indicative of a word such as "scream" to request one or more sound recordings including one or more scream sounds. In response to the output circuitry 140 outputting a candidate sound recording including one or more scream sounds, as the second user input the may repeat the word "scream" with a lower or higher pitch, and the second modifying circuitry 170 thus modifies the data for the candidate sound recording to vary a pitch associated with the audio data to either increase or decrease a pitch in dependence upon a difference between the second input data and the first input data. Alternatively or in addition, the second user input may repeat the word(s) included in the first user input with a shorter or longer duration to indicate that modification of a speed for the sound recording is desired. Hence more generally, the second input data can be compared to the first input data, and the second modifying circuitry 170 can be configured to modify the candidate sound recording in dependence upon one or more differences between the first input data and the second input data.

Figure 8 is a schematic flowchart illustrating a data processing method that may be carried out by the data processing apparatus 100 to modify a candidate sound recording. The operations at the steps 210 to 240 are the same as those described with respect to Figure 2. After outputting (at the step 240) data in dependence upon one or more of the candidate sound recordings by outputting data for at least one candidate sound recording, the method further comprises: receiving (at a step 250) second input data in response to the data output at the step 240; modifying (at a step 260) the candidate sound recording in dependence upon the second input data to obtain a modified sound recording; and outputting (at a step 270) data for the modified sound recording. The step 270 is performed by outputting data for a portion or the entirety of the modified sound recording.

In some embodiments of the disclosure, the storage circuitry 110 is configured to store a plurality of sound recordings, in which at least some of the plurality of sound recordings comprise a respective sound effect. The plurality of sound recordings may comprise a first sound recording including a first respective sound effect and a second sound recording including a second respective sound effect. More generally, the storage circuitry 110 may store a library of sound effects for use by a content creator. Hence, there may be a number of respective sound recordings each including a different sound for a given type of sound effect, and some of the sound recordings may include different sounds for a same type of sound effect. For example, a plurality of sound recordings each corresponding to an explosion type of sound effect may be stored; a first sound recording may correspond to a distant explosion, another sound recording may correspond to an explosion with falling debris, another sound recording may correspond to a firework explosion and another sound recording may correspond to a vehicle explosion. It will be appreciated that the storage circuitry 110 may store a library of sound recordings for a range of different types of sound effect. In this way, the data processing apparatus 100 receives the first input data and selects one or more sound recordings each including a same type of sound effect in dependence upon the first input data.

In some embodiments of the disclosure, the storage circuitry 110 is configured to store a plurality of sound recordings, wherein at least some of the plurality of sound recordings are included in a database for a respective video game. A database can be used to store various information for use by a developer during development of a video game. Various sound clips recorded for the video game can be stored in the database for use by a developer. When developing a scene for a video game, the data processing apparatus 100 can thus assist the user in quickly retrieving one or more sound recordings included in the database in dependence upon the received input data indicative of one or more sounds detected by the microphone. Therefore, rather than having to manually search through the database, one or more sound recordings can be selected and output responsive to the user's input via the microphone. In some examples, the user may be developing a scene for a given video game that is different from the video game associated with the database, and one or more sound recordings can be output by the output circuitry 140 to assist a developer in obtaining sound recordings previously created for one video game for use in another video game.

In some examples, the storage circuitry 110 is configured to store a plurality of sound recordings, wherein at least some of the plurality of sound recordings are included in a database for a first respective video game and at least some of the plurality of sound recordings are included in a database for a second respective video game. Hence, the selection circuitry 130 can select from a pool of sound recordings originally created for use with a number of different video games to select one or more candidate sound recordings for output to the user to thereby assist the user in obtaining one or more sound recordings without having to know a storage location or even a video game for which the sound recording was previously created.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus, comprising:
storage circuitry (110) to store a plurality of sound recordings;
receiving circuitry (120) to receive input data indicative of one or more sounds detected by a microphone;
selection circuitry (130) to select, from the plurality of sounds recordings, one or more candidate sound recordings in dependence upon the input data;
output circuitry (140) to output data in dependence upon one or more of the candidate sound recordings; and
second modifying circuitry (170) to modify the one or more selected candidate sound recordings, wherein the receiving circuitry is configured to receive second input data in response to the data output by the output circuitry, wherein the second modifying circuitry is configured to modify the candidate sound recording in dependence upon the second input data, and wherein at least some of the plurality of sound recordings comprise a respective sound effect.

2. The data processing apparatus according to claim 1, wherein the input data is indicative of a speech-based input by a user, wherein the speech-based input comprises at least one of a spoken word and a non-linguistic vocalisation by the user.

3. The data processing apparatus according to claim 1 or claim 2, wherein the input data is indicative of a non-speech based input by a user, wherein the non-speech based input comprises one or more sounds associated with one or more objects.

4. The data processing apparatus according to any preceding claim, wherein the selection circuitry is configured to select a candidate sound recording in dependence upon a degree of match between the candidate sound recording and the input data.

5. The data processing apparatus according to claim 4, wherein the selection circuitry is configured to select the candidate sound recording in dependence upon a difference between an audio property of the candidate sound recording and a corresponding audio property of the input data.

6. The data processing apparatus according to claim 5, comprising first modifying circuitry (150) to modify the audio property of the candidate sound recording in dependence upon the corresponding audio property of the input data when the difference between the audio property of the candidate sound recording and the corresponding audio property of the input data is greater than a threshold amount.

7. The data processing apparatus according to any preceding claim, wherein the selection circuitry is configured to generate text data in dependence upon the input data and to select the candidate sound recording in dependence upon a comparison of the text data with metadata associated with the candidate sound recording.

8. The data processing apparatus according to claim 7, wherein the metadata associated with the candidate sound recording is determined, using a machine learning model, in dependence upon one or more audio properties for the candidate sound recording.

9. The data processing apparatus according to any preceding claim, wherein the output circuitry is configured to output data for at least a first candidate sound recording and a second candidate sound recording.

10. The data processing apparatus according to any preceding claim, comprising mixing circuitry (160) to mix two or more of the candidate sounds recordings to obtain a combined sound recording, wherein the output circuitry is configured to output data for the combined sound recording.

11. The data processing apparatus according to claim 1, wherein the second input data is indicative of at least one of a speech-based input and a controller input by a user for indicating one or more modifications to be applied to the candidate sound recording.

12. A data processing method comprising:
storing (210) a plurality of sound recordings;
receiving (220) input data indicative of one or more sounds detected by a microphone;
selecting (230), from the plurality of sounds recordings, one or more candidate sound recordings in dependence upon the input data;
outputting (240) data in dependence upon one or more of the candidate sound recordings;
receiving (250) second input data in response to the data output by the outputting step; and
modifying (260) the one or more selected candidate sound recordings in dependence upon the second input data, wherein at least some of the plurality of sound recordings comprise a respective sound effect.

13. Computer software which, when executed by a computer, causes the computer to carry out the method of claim 12.

## Patentansprüche

1. Datenverarbeitungseinrichtung, umfassend:
Speicherschaltlogik (110) zum Speichern einer Vielzahl von Tonaufnahmen;
Empfangsschaltlogik (120) zum Empfangen von Eingabedaten, die auf einen oder mehrere von einem Mikrofon erfasste Töne hinweisen;
Auswahlschaltlogik (130) zum Auswählen einer oder mehrerer Kandidaten-Tonaufnahmen aus der Vielzahl von Tonaufnahmen in Abhängigkeit von den Eingabedaten;
Ausgabeschaltlogik (140) zum Ausgeben von Daten in Abhängigkeit von einer oder mehreren der Kandidaten-Tonaufnahmen; und
eine zweite Modifikationsschaltlogik (170) zum Modifizieren der einen oder mehreren ausgewählten Kandidaten-Tonaufnahmen, wobei die Empfangsschaltlogik konfiguriert ist, um als Reaktion auf die von der Ausgabeschaltlogik ausgegebenen Daten zweite Eingabedaten zu empfangen, wobei die zweite Modifikationsschaltlogik konfiguriert ist, um die Kandidaten-Tonaufnahme in Abhängigkeit von den zweiten Eingabedaten zu modifizieren, und wobei mindestens einige der Vielzahl von Tonaufnahmen einen jeweiligen Toneffekt umfassen.

2. Datenverarbeitungseinrichtung nach Anspruch 1, wobei die Eingabedaten auf eine sprachbasierte Eingabe durch einen Benutzer hinweisen, wobei die sprachbasierte Eingabe mindestens eines von einem gesprochenen Wort und einer nicht-sprachlichen Vokalisierung durch den Benutzer umfasst.

3. Datenverarbeitungseinrichtung nach Anspruch 1 oder 2, wobei die Eingabedaten auf eine nicht sprachbasierte Eingabe durch einen Benutzer hinweisen, wobei die nicht sprachbasierte Eingabe einen oder mehrere Töne umfasst, die einem oder mehreren Objekten zugeordnet sind.

4. Datenverarbeitungseinrichtung nach einem der vorstehenden Ansprüche, wobei die Auswahlschaltlogik konfiguriert ist, um in Abhängigkeit vom Übereinstimmungsgrad zwischen der Kandidaten-Tonaufnahme und den Eingabedaten eine Kandidaten-Tonaufnahme auszuwählen.

5. Datenverarbeitungseinrichtung nach Anspruch 4, wobei die Auswahlschaltlogik konfiguriert ist, um die Kandidaten-Tonaufnahme in Abhängigkeit von einem Unterschied zwischen einer Audioeigenschaft der Kandidaten-Tonaufnahme und einer entsprechenden Audioeigenschaft der Eingabedaten auszuwählen.

6. Datenverarbeitungseinrichtung nach Anspruch 5, die eine erste Modifikationsschaltlogik (150) umfasst, um die Audioeigenschaft der Kandidaten-Tonaufnahme in Abhängigkeit von der entsprechenden Audioeigenschaft der Eingabedaten zu modifizieren, wenn der Unterschied zwischen der Audioeigenschaft der Kandidaten-Tonaufnahme und der entsprechenden Audioeigenschaft der Eingabedaten größer als ein Schwellenwert ist.

7. Datenverarbeitungseinrichtung nach einem der vorstehenden Ansprüche, wobei die Auswahlschaltlogik konfiguriert ist, um Textdaten in Abhängigkeit von den Eingabedaten zu generieren und die Kandidaten-Tonaufnahme in Abhängigkeit von einem Vergleich der Textdaten mit den mit den Kandidaten-Tonaufnahme zugeordneten Metadaten auszuwählen.

8. Datenverarbeitungseinrichtung nach Anspruch 7, wobei die der Kandidaten-Tonaufnahme zugeordneten Metadaten unter Verwendung eines Maschinenlernmodells in Abhängigkeit von einer oder mehreren Audioeigenschaften für die Kandidaten-Tonaufnahme bestimmt werden.

9. Datenverarbeitungseinrichtung nach einem der vorstehenden Ansprüche, wobei die Ausgabeschaltlogik konfiguriert ist, um Daten für mindestens eine erste Kandidaten-Tonaufnahme und eine zweite Kandidaten-Tonaufnahme auszugeben.

10. Datenverarbeitungseinrichtung nach einem der vorstehenden Ansprüche, die eine Mischschaltlogik (160) zum Mischen von zwei oder mehr der Kandidaten-Tonaufnahmen umfasst, um eine kombinierte Tonaufnahme zu erhalten, wobei die Ausgabeschaltlogik konfiguriert ist, um Daten für die kombinierte Tonaufnahme auszugeben.

11. Datenverarbeitungseinrichtung nach Anspruch 1, wobei die zweiten Eingabedaten auf mindestens eine sprachbasierte Eingabe und eine Steuerungseingabe durch einen Benutzer hinweisen, um auf eine oder mehrere Modifikationen hinzuweisen, die an der Kandidaten-Tonaufnahme vorgenommen werden.

12. Datenverarbeitungsverfahren, umfassend:
Speichern (210) einer Vielzahl von Tonaufnahmen;
Empfangen (220) von Eingabedaten, die auf einen oder mehrere von einem Mikrofon erfasste Töne hinweisen;
Auswählen (230) einer oder mehrerer Kandidaten-Tonaufnahmen aus der Vielzahl von Tonaufnahmen in Abhängigkeit von den Eingabedaten;
Ausgeben (240) von Daten in Abhängigkeit von einer oder mehreren der Kandidaten-Tonaufnahmen;
Empfangen (250) zweiter Eingabedaten als Reaktion auf die im Ausgabeschritt ausgegebenen Daten; und
Modifizieren (260) der einen oder mehreren ausgewählten Kandidaten-Tonaufnahmen in Abhängigkeit von den zweiten Eingabedaten, wobei mindestens einige der Vielzahl von Tonaufnahmen einen jeweiligen Toneffekt umfassen.

13. Computersoftware, die, wenn sie durch einen Computer ausgeführt wird, den Computer veranlasst, das Verfahren nach Anspruch 12 auszuführen.

## Revendications

1. Appareil de traitement de données, comprenant :
un système de circuit de stockage (110) destiné à stocker une pluralité d'enregistrements sonores ;
un système de circuit de réception (120) destiné à recevoir des données d'entrée indiquant un ou plusieurs sons détectés par un microphone ;
un système de circuit de sélection (130) destiné à sélectionner, parmi la pluralité d'enregistrements sonores, un ou plusieurs enregistrements sonores candidats en fonction des données d'entrée ;
un système de circuit de sortie (140) destiné à délivrer en sortie des données en fonction de l'un ou plusieurs des enregistrements sonores candidats ; et
un second système de circuit de modification (170) destiné à modifier le ou les enregistrements sonores candidats sélectionnés, dans lequel le système de circuit de réception est configuré pour recevoir des secondes données d'entrée en réponse aux données délivrées en sortie par le système de circuit de sortie, dans lequel le second système de circuit de modification est configuré pour modifier l'enregistrement sonore candidat en fonction des secondes données d'entrée, et dans lequel au moins une partie de la pluralité d'enregistrements sonores comprend un effet sonore respectif.

2. Appareil de traitement de données selon la revendication 1, dans lequel les données d'entrée indiquent une entrée de type vocal par un utilisateur, dans lequel l'entrée de type vocal comprend au moins l'un d'un mot prononcé et une vocalisation non linguistique par l'utilisateur.

3. Appareil de traitement de données selon la revendication 1 ou la revendication 2, dans lequel les données d'entrée indiquent une entrée de type non vocal par un utilisateur, dans lequel l'entrée de type non vocal comprend un ou plusieurs sons associés à un ou plusieurs objets.

4. Appareil de traitement de données selon l'une quelconque revendication précédente, dans lequel le système de circuit de sélection est configuré pour sélectionner un enregistrement sonore candidat en fonction d'un degré de correspondance entre l'enregistrement sonore candidat et les données d'entrée.

5. Appareil de traitement de données selon la revendication 4, dans lequel le système de circuit de sélection est configuré pour sélectionner l'enregistrement sonore candidat en fonction d'une différence entre une propriété audio de l'enregistrement sonore candidat et une propriété audio correspondante des données d'entrée.

6. Appareil de traitement de données selon la revendication 5, comprenant un premier système de circuit de modification (150) destiné à modifier la propriété audio de l'enregistrement sonore candidat en fonction de la propriété audio correspondante des données d'entrée lorsque la différence entre la propriété audio de l'enregistrement sonore candidat et la propriété audio correspondante des données d'entrée est supérieure à un seuil.

7. Appareil de traitement de données selon l'une quelconque revendication précédente, dans lequel le système de circuit de sélection est configuré pour générer des données textuelles en fonction des données d'entrée et pour sélectionner l'enregistrement sonore candidat en fonction d'une comparaison des données textuelles avec des métadonnées associées à l'enregistrement sonore candidat.

8. Appareil de traitement de données selon la revendication 7, dans lequel les métadonnées associées à l'enregistrement sonore candidat sont déterminées, à l'aide d'un modèle d'apprentissage automatique, en fonction d'une ou plusieurs propriétés audio pour l'enregistrement sonore candidat.

9. Appareil de traitement de données selon l'une quelconque revendication précédente, dans lequel le système de circuit de sortie est configuré pour délivrer en sortie des données pour au moins un premier enregistrement sonore candidat et un second enregistrement sonore candidat.

10. Appareil de traitement de données selon l'une quelconque revendication précédente, comprenant un système de circuit de mixage (160) destiné à mixer deux ou plusieurs des enregistrements sonores candidats afin d'obtenir un enregistrement sonore combiné, dans lequel le système de circuit de sortie est configuré pour délivrer en sortie des données pour l'enregistrement sonore combiné.

11. Appareil de traitement de données selon la revendication 1, dans lequel les secondes données d'entrée indiquent au moins l'une d'une entrée de type vocal et d'une entrée de dispositif de commande par un utilisateur pour indiquer une ou plusieurs modifications à appliquer à l'enregistrement sonore candidat.

12. Procédé de traitement de données comprenant :
le stockage (210) d'une pluralité d'enregistrements sonores ;
la réception (220) de données d'entrée indiquant un ou plusieurs sons détectés par un microphone ;
la sélection (230), parmi la pluralité d'enregistrements sonores, d'un ou plusieurs enregistrements sonores candidats en fonction des données d'entrée ;
la sortie (240) de données en fonction d'un ou de plusieurs enregistrements sonores candidats ;
la réception (250) de secondes données d'entrée en réponse aux données délivrées en sortie par l'étape de sortie ; et
la modification (260) du ou des enregistrements sonores candidats sélectionnés en fonction des secondes données d'entrée, dans lequel au moins une partie de la pluralité d'enregistrements sonores comprend un effet sonore respectif.

13. Logiciel informatique qui, lorsqu'il est exécuté par un ordinateur, amène l'ordinateur à effectuer le procédé selon la revendication 12.
